Europäisches Patentamt

European Patent Office

Office européen des brevets

(11) Publication number: **0 258 485 B1**

# EUROPEAN PATENT SPECIFICATION

(45) Date of publication of patent specification: **22.01.92** (51) Int. Cl.5: **C08F 4/64**, C08F 10/00

(21) Application number: **86112297.6**

(22) Date of filing: **05.09.86**

(54) Catalyst system for use in olefinic polymerization.

(43) Date of publication of application:
**09.03.88 Bulletin 88/10**

(45) Publication of the grant of the patent:
**22.01.92 Bulletin 92/04**

(84) Designated Contracting States:
**DE FR GB IT NL**

(56) References cited:
**FR-A- 2 516 520**

**PATENT ABSTRACTS OF JAPAN, vol. 8, no.
15 (C-206)[1452], 21st January 1984**

**PATENT ABSTRACTS OF JAPAN, vol. 9, no.
74 (C-273)[1797], 3rd April 1985**

(73) Proprietor: **Beijing Research Institute of
Chemical Industry, Ministry of Chemical In-
dustry
HePingLi
Beijing(CN)**

Proprietor: **SINOPEC CHINA PETRO-
CHEMICAL CORPORATION
Yanbin Hotel Room 403
Beijing(CN)**

(72) Inventor: **Mao, Bingquan
No. 6 Third Floor East Entrance Building 20
No. 12 Block HePingLi Beijing(CN)**
Inventor: **Yang, Aichun
No. 2 Fourth Floor East Entrance Building 20
No. 12 Block HePingLi Beijing(CN)**
Inventor: **Zheng, Ying
No. 401 Entrance 1, Building 6
No. 23 XinJieKouWai St. Beijing(CN)**
Inventor: **Yang, Juyiou
Room No. 807 No. 40 DongHuangChengGen
North St.
Beijing(CN)**
Inventor: **Li, Zhulan
No. 1 West Entrance Building A 16
No. 12 Block HePingLi Beijing(CN)**

(74) Representative: **Schupfner, Gerhard D. et al
Müller, Schupfner & Gauger Karlstrasse 5
Postfach 14 27
W-2110 Buchholz/Nordheide(DE)**

## Description

The present invention relates to the composition and preparation of a catalyst system for use in olefinic polymerization and copolymerization and the method of using the same in the process of olefinic polymerization and copolymerization.

Great efforts have been made in increasing the activity of olefinic polymerisation catalyst and improving the property of the polymer. In recent years, tetravalent titanium compounds supported by magnesium compounds have been used as the catalyst of olefinic polymerization. These catalysts have high activity since the use of supporter increases the efficiency of the active center (titanium atoms) of catalyst. For the polymerization of $\alpha$-olefins having 3 or more carbon atoms, certain electron donor must be added to the solid catalyst to ensure the stereospecificity of the polymers.

One method of preparing such catalyst is grinding/pulverization. Catalyst prepared by this method has many disadvantages. Another method of preparation has been proposed in order to overcome the disadvantages, i.e magnesium compound is first dissolved in solvents and then catalyst solid precipitate is separated out.

Japanese Laid-Open Patent 58-183708 disclosed using a mixture of organic epoxy compounds and organic phosphorus compounds to dissolve magnesium compound, then mixing with monocarboxylic ester and titanium tetrahalide. The separated solid is used as the catalyst for use in olefinic polymerization. These catalysts overcome to a certain extent the disadvantages of the catalysts prepared by grinding/pulverization, but the activity of the catalysts is relatively low, and when the polymerization time is extended, the activity of the catalyst decreases obviously. Both apparent density and stereospecificity of the resultant polymers are not high enough, the polymer has unpleasant odour and the quality of product polymers is affected as the amount of residual Cl⁻ions is relatively large. All the above-mentioned disadvantages remain to be improved.

Japanese Laid-Open Patent 58-83006 disclosed using alcohols, aldehydes, amides and carboxylic acids to dissolve magnesium compound, then adding benzoic anhydride and dicarboxylic ester to prepare solid catalyst. The catalyst thus prepared has high activity and the product polymers have better granule appearance. Whereas in the process of preparing the catalyst, severe operation conditions are required as the dissolving temperature for magnesium compound is high and dissolving speed is slow, and the viscosity of magnesium compound solution is high so that operation is difficult. Further, the efficiency of autoclave is low, and environmental pollution is readily to occur for titanium tetrachloride is used in large amounts as starting material.

The present invention provides a catalyst system suitable for use in olefinic polymerization and copolymerization. This catalyst system has high activity, and when the time of polymerization is extended, the catalyst has little reduction in activity. The resultant polymers have good granule appearance, narrow particle size distribution and high apparent density. Polymers of olefins having 3 or more than 3 carbon atoms have high stereospecificity with little decrease when melt index becomes larger. The resultant polymers have very low Cl⁻ions content. The polymers are free of unpleasant odour and are not corrosive to the equipment. Other advantages are easy operation, less material consumption, high efficiency of the apparatus and less pollution when preparing the catalyst.

The present invention further provides a process of preparing the catalyst system, particularly a process of preparing component (A) of the catalyst system.

The present invention also provides a method of using the catalyst system in the olefinic polymerization.

The catalyst system for use in olefinic polymerization of the present invention comprises components (A), (B) and (C), in which component (C) may exist or not according to different olefins.

Component (A) is a solid prepared by the following method:

Magnesium halide is first dissolved in the uniform solution made by mixing organic epoxy compounds and organic phosphorus compounds. Then mix the resultant solution with titanium tetrahalide or its derivatives, followed by adding auxiliary precipitant such as organic anhydrides, organic acids, ethers, ketones and the like to precipitate solids. The solids are treated with polycarboxylic ester which is loaded on the solids. After separation, the solids are treated with titanium tetrahalide or its derivatives and inert diluent to obtain solid catalyst component (A) consisting essentially of titanium, magnesium, halogen, polycarboxylic esters and organic phosphorus compounds.

Component (B) is an organic aluminium compound.

Component (C) is an organic silicon compound.

The present invention specifically refers to a solid catalyst component comprising 1.5-6.0% by weight of titanium, 10-20% by weight of magnesium, 40-70% by weight of halogen selected from the group consisting of chlorine, bromine and iodine, 5-25% by weight of polycarboxylic esters selected from the group consisting of the esters of aliphatic, aromatic and alicyclic polycarboxylic acids, and 0.1-2.5% by weight of organic phosphorus compounds, and a process for preparing this catalyst component characterized in that it comprises the steps of:

(1) dissolving magnesium halide compounds selected from the group consisting of magnesium halide, complexes of magnesium dihalide with water or alcohol, and derivatives of magnesium dihalide wherein a halogen atom is substituted by a hydrocarbyl group or a halo-hydrocarbyl group in a solvent mixture consisting essentially of organic epoxy compounds having 2-8 carbon atoms and selected from the group consisting of oxides of aliphatic olefins and diolefins, halogenated aliphatic olefins and diolefins, glycidyl ethers and cyclic ethers, and organic phosphorus compounds selected from the group consisting of hydrocarbyl esters of phosphoric acids and phosphorous acids, to form a homogeneous solution;

(2) adding to the homogeneous solution of step (1) at least one auxiliary precipitant selected from the group consisting of organic anhydrides, organic acids, ethers and ketones;

(3) mixing the homogeneous solution of step (2) with a liquid titanium tetrahalide or its derivatives having the formula $TiX_n(OR)_{4-n}$, wherein X is halogen, R is an hydrocarbyl group being identical or different, and n is an integer of 0 to 4, to form precipitates;

(4) adding at least one polycarboxylic ester, preferably when the precipitates appear;

(5) separating the precipitates from the mixture and washing the separated precipitates with an inert diluent and then treating the separated precipitates with the titanium tetrahalide or its derivatives having the formula $TiX_n(OR)_{4-n}$, wherein X is halogen, R is an hydrocarbyl group being identical or different, and n is an integer of 0 to 4, or a mixture of said titanium tetrahalide or its derivatives and inert diluents;

(6) washing the treated precipitates with an inert diluent.

The present invention will be described in more detail as follows.

## 1. Preparation of magnesium halide solution

Magnesium halide solution herein means a uniform solution obtained by dissolving magnesium halides in the solvent system consisting essentially of organic epoxy compounds and organic phosphorus compounds, the solvent system herein includes using or not using inert diluents.

The particle size of the magnesium halides used is prefered to be such that it is easily dissolved under stirring. The dissolving temperature is about 0 - 100°C, preferably from 30 -70°C. Inert diluents such as hexane, heptane, octane, benzene, toluene, xylene, 1,2-dichloroethane, chlorobenzene and other hydrocarbons or halohydrocarbons can be added into the solvent system, with benzene, toluene and xylene being preferred. The most preferred diluent is toluene. The amount of epoxy compounds added in the solution is about 0.2-10 moles, preferably 0.5-4.0 moles, based on per mole magnesium halide, and the amount of organic phosphorus compounds added is about 0.1-3.0 moles, preferably 0.3-1.0 moles, based on per mole magnesium halide.

The said magnesium halides include magnesium chloride, magnesium bromide, magnesium iodide and complexes of magnesium dihalide with water or alcohol and the like, and derivatives of magnesium dihalide wherein a halogen atom is substituted by a hydrocarboxyl group or a halohydrocarboxyl group. The most preferred magnesium halide is magnesium chloride.

The organic epoxy compounds include oxides of aliphatic olefines, diolefins, halogenated aliphatic olefins, and diolefins, glycidyl ethers, cyclic ethers and the like which all have 2-8 carbon atoms. Examples of the organic epoxy compounds are ethylene oxide, propylene oxide, butylene oxide, butadiene oxide, butadiene dioxide, epoxy chloropropane, methylglycidyl ether, diglycidyl ether, tetrahydrofuran and the like, wherein ethylene oxide, propylene oxide and epoxy chloropropane are preferred, with epoxy chloropropane being the most preferred.

The organic phosphorus compounds include hydrocarbyl esters of phosphoric acid or phosphorous acid, e.g trimethyl phosphate, triethyl phosphate, tributyl phosphate, triphenyl phosphate, trimethyl phosphite, triethyl phosphite, tributyl phosphite, triphenyl phosphite and the like, wherein trimethyl phosphate, triethyl phosphate and tributyl phosphate are preferred, with tributyl phosphate being the most preferred.

## 2. Precipitation of the solids

Mix the magnesium halide solution obtained by the above-mentioned procedure with liquid titanium tetrahalide or its derivatives, and precipitate the solids in the presence of auxiliary precipitant. Polycarboxylic ester is added and loaded on the solids before, during or after the precipitation of the solids.

The process of solids precipitation can be carried out by two methods. One is mixing liquid titanium tetrahalide or its derivatives, with magnesium halide at temperature about 0 to -40°C, precipitating solids while the temperature is raised slowly to a range of 30-120°C, preferably 60-100°C. The other is dripping liquid titanium tetrahalide or its derivatives, into the uniform solution of megnesium halide at room temperature, solids can be precipitated out immediately. In the above two cases, an auxiliary precipitant must be present in the reaction system, which can be added either after the magnesium halide solution is obtained or together with magnesium halide in step 1. Alternatively, two or more auxiliary precipitants can be added simultaneously.

The solids are treated by adding a polycarboxylic ester into the system after the precipitation process. Alternatively, a polycarboxylic ester can be added durring the precipitation process. Alternatively, two or more polycarboxylic esters can be added simultaneously.

In order to obtain uniform particles, the process of precipitation is necessarily carried out slowly. When the second method of dripping titanium halide at room temperature is applied, the time for dripping preferably ranges from 1 to 6 hours; when the first method of raising the temperature in a slow manner is applied, the rate of temperature increase preferably ranges from 4 to 100°C per hour.

The mole ratio of various components in this step, based on per mole of magnesium halide, are as follows: titanium halide, 0.5-150, preferably 1-20, auxiliary precipitant, 0.03-1.0, preferably 0.05-0.4, polycarboxylic ester, 0.03-2.0, preferably 0.1-0.5.

The liquid titanium tetrahalide or its derivatives used in this step can be in the pure liquid state, or in a solution containing inert diluents, having the general formula $TiX_n(OR)_{4-n}$, wherein X is a halogen, R is a hydrocarbyl group being dentical or different, n is an integer ranging from 0 to 4. Examples of the compounds are titanium tetrachloride, titanium tetrabromide, titanium tetraiodide, tetrabutoxy titanium, tetraethoxy titanium, chlorotriethoxy titanium, dichlorodiethoxy titanium, trichloroethoxy titanium and the like, wherein titanium tetrachloride being the most preferred.

The auxiliary precipitants according to this invention include organic anhydrides, organic acids, ketones, ethers and the like, such as acetic anhydride, phthalic anhydride, succinic anhydride, maleic anhydride, pyromellitic dianhydride, acetic acid, propionic acid, butyric acid, acrylic acid, methacrylic acid, acetone, methyl ethyl ketone, benzophenone, methyl ether, ethyl ether, propyl ether, butyl ether, amyl ether and the like, wherein the organic anhydrides are perferred, with phthalic anhydride being the most preferred.

Polycarboxylic esters according to this invention include aliphatic, aromatic and alicyclic polycarboxylic esters. Examples of these esters are diethyl malonate, dibutyl malonate, diethyl adipate, dibutyl adipate, diethyl sebate, dibutyl sebate, di-n-butyl phthalate, di-iso-butyl phthalate, di-iso-octyl phthalate, diethyl maleate, di-n-butyl maleate, diethyl naphthalenedicarboxylate, triethyl trimellitate, tributyl trimellitate, triethyl hemimellitate, tributyl hemimellitate, tetraethyl pyromellitate, tetrabutyl pyromellitate, diethyl 1,2-cyclohexane-dicarboxylate, dibutyl 1,2-cyclohexane-dicarboxylate, wherein di-n-butyl phthalate and di-iso-butyl phthalate are preferred.

3. Treatment and washing of the solid precipitate

The solid precipitate is first separated from the mixture. The solid precipitate obtained entrained varieties of complexes and impurities, so that further treatment is needed.

Said solid precipitate is washed with inert diluent and then treated with titanium tetrahalide or mixture of titanium tetrahalide and inert diluent. The titanium tetrahalide used in this step is also of the general formula $TiX_n(OR)_{4-n}$, being identical to or different with the titanium tetrahalide used in step 3, with titanium tetrachloride being the most preferred. The amount of titanium tetrahalide used is 1 to 20 moles, preferably 2 to 15 moles, based on per mole of magnesium halide. The treating temperature ranges from 50°C to 150°C, preferably from 60°C to 100°C. If the mixture of titanium tetrahalide and inert diluent is used to treat the solid precipitate, the volume % of titanium tetrahalide in the treating solution is 10-100 percent, preferably 20-80 percent, the rest being inert diluent.

The treated solids are subjected to further washing with inert diluent to remove ineffective titanium compounds and other impurities.

The inert diluent herein used can be hexane, heptane, octane, 1,2-dichloroethane, benzene, toluene and other hydrocarbons. 1,2-dichloroethane is the most preferred diluent in the final washing step.

4. Characteristics and chemical composition of the solid catalyst component (A)

Component (A) according to the present invention is thus obtained through the above described steps 1,2 and 3, which can be used in solid form or in suspension.

4

The solid component (A) obtained according to this invention is in a form of solid particles, with an average particle size of 2-20 microns. It has high specific surface area which is more than $50m^2$/gram, preferably more than $200m^2$/gram. Its particle size can be controlled by alteration of the preparing conditions.

The solid catalyst component (A) has the following chemical composition: titanium 1.5-6.0wt%, magnesium 10-20wt%, halogen 40-70wt%, polycarboxylic ester 5-25wt%, organic phosporus compounds 0.1-2.5wt% and inert diluent 0-15wt%.

The catalyst system according to this invention comprises components (A), (B) and (C), in which component (C) may exist or not according to different olefins.

Component (B) is an organic aluminium compound, having the general formula $AlR_nX_{3-n}$, wherein R is a hydrogen atom, or a hydrocarbyl group having 1-20 carbon atoms, preferably an alkyl, aralkyl or aromatic group; X is a halogen atom, preferably a chlorine atom or a bromine atom; n is an integer of $0 < n \le 3$. Examples of the compounds are trialkyl aluminiums such as trimethyl aluminium, triethyl aluminium, tri-iso-butyl aluminium, trioctyl aluminium; hydrogenated alkyl aluminiums such as diethyl aluminium hydride, di-iso-butyl aluminium hydride; halogenated alkyl aluminiums such as diethyl aluminium chloride, di-iso-butyl aluminium chloride, ethyl aluminium sesquichloride, ethyl aluminium dichloride; with triethyl aluminium and tri-iso-butyl aluminium being preferred.

The organic aluminium compound is used in the catalyst system to such an amount that the mole ratio of aluminium to the titanium in solid component (A) is about 5-5000, preferably about 20-500.

Component (C) is an organic silicon compound having the general formular $Rn Si (OR')_{4-n}$, wherein n is an integer of $0 \le n \le 3$; R and R' are alkyl, cycloalkyl, aromatic group, or alkyl group substituted by halogen, being identical or different; R can also be a halogen or a hydrogen atom. Examples of such compounds are trimethyl methoxysilane, trimethyl ethoxysilane, trimethyl phenoxysilane, dimethyl dimethoxysilane, dimethyl diethoxysilane, diphenyl dimethoxysilane, diphenyl diethoxysilane, phenyl triethoxysilane, phenyl trimethoxysilane, vinyl trimethoxysilane and the like. Preferred compounds are diphenyl dimethoxysilane, diphenyl diethoxysilane, dimethyl dimethoxysilane and dimethyl diethoxysilane, with diphenyl dimethoxysilane and diphenyl diethoxysilane being the most preferred.

The organic silicon compound is used in the catalyst system to such an amount that the mole ratio of organic aluminium compound to organic silicon compound is about 2-100, preferably 5-40.

In general, component (C) is added in the polymerization of propylene.

It is suitable to employ the catalyst system of this invention in the polymerization of α-olefins, e.g ethylene, propylene, 1-butylene, 4-methyl-1-pentene, 1-hexylene, 1-octylene and the like. Homopolymerization as well as atactic copolymerization and block copolymerization of these olefins can be carried out using the catalyst system of the present invention. Conjugated diene or nonconjugated diene can be selected as monomer in the copolymerization.

Liquid-phase polymerization and gas-phase polymerization can both be employed. Inert solvent selected from saturated aliphatic or aromatic hydrocarbons such as hexane, heptane, cyclohexane, naphtha, extract oil, hydrogenated gasoline, kerosene, benzene, toluene and xylene can be used as reaction medium in liquid-phase polymerization. The olefin itself can also act as reaction medium. Prepolymerization can be conducted before the polymerization takes place. The polymerization can be carried out in batch mode, semi-continuous or continuous mode.

The polymerization takes place at a temperature ranging from room temperature to 150°C, preferably from 50 to 100°C. Hydrogen gas is used as molecular weight regulator.

To further illustrate this invention, and not by way of limitation, the following examples and comparative examples are given.

Example 1

1. Preparation of a solid catalyst component (A):

Anhydrous magnesium chloride (0.05 mol), toluene (75ml), epoxy chloropropane (0.1mol) and tributyl phosphate (0.03 mol) were introduced into a reactor which had thoroughly been purged with high purified nitrogen. The temperature was raisd to 50°C with stirring, and the mixture was then maintained at this temperature for 2 hours, while the solid was dissolved completely. Phthalic anhydride (0.008 mol) was added to the solution, and then the solution was maintained for additional 1 hour at 50°C. The solution was cooled to -25°C, titanium tetrachloride (55ml) was added dropwise over the course of 1 hour. The solution was heated to 80°C over the course of 3 hours, while solid product was precipitated. Diisobutyl Phthalate (0.0125 mol) was added at the temperature. The mixture was then maintained at the temperature for 1 hour.

The solid portion was collected by filtration and washed with toluene (2×100 ml), brown-yellow solid precipitate was obtained. The solid was treated with the mixture of toluene (60 ml) and titanium tetrachloride (40ml) for 2 hours at 90°C. After filtrate was removed, the treatment step was repeated. The solid was washed with dichloroethane (100ml), and then washed with hexane (4×100ml).

The solid catalyst component (A) was obtained by the above procedure. The solid catalyst component contained 1.92% by weight of titanium, 17.5% by weight of magnesium, 56.5% by weight of chlorine, 13.2% by weight of diisobutyl phthalate, 0.32% by weight of tributyl phosphate. The specific surface area of it is 290 m$^2$/g.

2. Solution polymerization

Industrial grade hexane (800ml), triethyl aluminium (0.0025mol), diphenyl dimethoxysilane (0.000125mol) and 0.5mg, calculated as the titanium atom, of solid catalyst component (A) prepared as above were introduced into a 2-liter stainless steel autoclave which had thoroughly been purged with propylene. After introducing 0.41 (standard volume) of hydrogen, the temperature was raised to 70°C. Propylene was introduced into the autoclave to maintain the pressure at 7 kg/cm$^2$ (G). The temperature was maintained at 70°C. Propylene was polymerized for 2 hours. The amount of the resulting polymer was 435g. The particle size distribution of the polymer was shown in Table 1, other results were shown in Table 2.

Example 2

Example 1 was followed except that the dichloroethane used in washing step was changed to hexane. The results are shown in Table 2.

Comparative Example 1

1. Preparation of a solid catalyst component:

Anhydrous magnesium chloride (0.05mol), toluene (75ml), epoxy chloropropane (0.1 mol) and tributyl phosphate (0.03 mol) were introduced into a reactor which had thoroughly been purged with high purified nitrogen. The temperature was raised to 50°C with stirring, and the mixture was maintained at this temperature for 2 hours, while the solid was dissolved completely. The solution was cooled to -25°C. Titanium tetrachloride (0.45mol) was added to the solution dropwise over the course of 1 hour, and then ethyl benzoate (0.015 mol) was added. The solution was heated to 80°C over the course of 3 hours, while solid product was precipitated. The mixture was maintained for 1 hour at 80°C. The solid portion was collected by filtration and washed with toluene (2×100ml), brown- yellow solid procipitate was obtained. the solid was treated with the mixture of toluene (50ml) and titanium tetrachloride (0.45mol) for 2 hours at 90°C. After filtrate was removed, the treatment step was repeated. The solid was washed five times with hexane. The solid catalyst component was obtained.

2. Solution polymerization

Industrial grade hexane (800ml), triisobutyl aluminium (0.003 mol), ethyl aluminium sesquichloride (0.001 mol), methyl p-methyl bezoate (0.0004 mol) and 0.5mg, calculated as the titanium atom, of the catalyst component prepared in Comparative Example 1 were introduced into a 2-liter stainless steel autoclave which had thoroughly been purged with propylene. After introducing 0.4 l (standard volume) of hydrogen, the temperature was raised to 70°C. Propylene was introduced continously into the autoclave to maintain the pressure at 7kg/cm$^2$(G). The temperature was maintained at 70°C. Propylene was polymerized for 2 hours. The amount of the resulting polymer was 159g. The particle size distribution of the polymer was shown in Table 1, other results were shown in Table 2.

Comparative Example 2

The polymerization procedure described in Example 1 was followed except that the solid catalyst component prepared in Example 1 was changed to one prepared in Comparative Example 1. The results were shown in Table 2.

Comparative Example 3

The polymerization procedure described in Comparative Example 1 was followed except that the solid catalyst component prepared in Comparative Example 1 was changed to one prepared in Example 1. The results were shown in Table 2.

Comparative Example 4

The polymerization procedure described in Comparative Example 1 was followed except that the solid catalyst component prepared in Comparative Example 1 was changed to one prepared in Example 2. The results were shown in Table 2.

Comparative Example 5

The same amounts as in Example 1 of anhydrous magnesium chloride, toluene, epoxy chloropropane and tributyl phosphate were introduced into a reactor which had throughly been purged with high purified nitrogen. The mixture was heated to 50°C with stirring, and maintained at this temperature for 2 hours, while solid was dissolved completely. The solution was maintained for additional 1 hour at 50°C. The solution was cooled to -25°C, titanium tetrachloride (55ml) was added dropwise over the course of 1 hour. The solution was heated to 80°C over the course of 3 hours, and no solid precipitate was detected. Diisobutyl phthalate (0.0125 mol) was added, and the mixture was maintained for 2 hours at 80°C. The reactants appear as colloidal solution, and no solid precipitate was obtained.

Comparative Example 6

Comparative Example 5 was followed except that diisobutyl phthalate was added immediately after the addition of titanium tetrachloride. The reactants appear as colloidal solution, and no solid precipitate was obtained.

Referring to Comparative Example 5 and 6, it was found that only colloidal solution was formed and no solid precipitate was separated out when the monocarboxylic ester is only repleaced by polycarboxylic ester in Japanese Laid-Open Patent 58-183708.

Table 1

| Particle Size Distribution of Polymer | | | | | | | |
|---|---|---|---|---|---|---|---|
| Example No. | >840μ | >350μ | >210μ | >177μ | >105μ | >74μ | <74μ |
| Ex. 1 | 0.2 | 74.2 | 22.8 | 3.0 | 2.2 | 0.6 | 0 |
| Co.Ex.1 | 1.0 | 36 | 35 | 10.2 | 10 | 4.8 | 5.2 |

7

Table 2

| Example No. | Ti. content of catalyst (wt%) | Efficiency of catalyst (Kg-PP/g-Ti )* | II(%)** of the white powdery polymer*** | II(%) of the entire polymer | Melt index of polymer (g/10min) | Bulk density of polymer (g/ml) |
|---|---|---|---|---|---|---|
| Ex.1 | 1.92 | 870 | 98.4 | 97.7 | 5.7 | 0.45 |
| Ex.2 | 3.08 | 482 | 97.6 | 96.6 | 10.5 | 0.42 |
| Co.Ex.1 | 3.19 | 352 | 96.8 | 94.5 | 2.4 | 0.41 |
| Co.Ex.2 | 3.19 | 341 | 88.7 | 83.1 | 9.6 | 0.37 |
| Co.Ex.3 | 1.92 | 450 | 89.7 | 85.1 | 28.1 | 0.36 |
| Co.Ex.4 | 3.08 | 340 | 88.4 | 84.0 | 40.8 | 0.34 |

\* kg-PP/g-Ti = kg-polypropylene/g-Ti

\*\* II = Isotacticity Index

\*\*\* After extracted from heptane.

Example 3-4

Example 1 was followed except that the polymerization time was changed to 4 hours and 6 hours, respectively. The results were shown in Table 3

| Example No. | polymerization time (hours) | Efficiency of catalyst (Kg-PP/g-Ti) | II(%) of the white powdery polymer | II(%) of the entire polymer | Melt index of polymer (g/10min) | Bulk density of polymer (g/ml) |
|---|---|---|---|---|---|---|
| Ex.1 | 2 | 870 | 98.4 | 97.7 | 5.7 | 0.45 |
| Ex.3 | 4 | 1290 | 97.9 | 97.3 | 4.7 | 0.44 |
| Ex.4 | 6 | 1620 | 97.8 | 97.2 | 6.7 | 0.45 |

Example 5

A solid catalyst component (A) was prepared in the same manner as in Example 1 except that the amount of phthalic anhydride added was changed to 0.04 mol. It was found that the particles of the solid precipitate were very fine. A great deal of solid particles were transferred to filtrate through filter cloth. The amount of the resulting solid catalyst component (A) was only 1.1g. Propylene was polymerized in the same way as in Example 1 using the resulting solid catalyst component (A). The results were shown in Table 4.

Example 6

A solid catalyst component (A) was prepared in the same manner as in Example 1 except that the amount of phthalic anhydride added was changed to 0.012 mol. The amount of the resulting solid catalyst component (A) was 6.6g, but Ti content of the catalyst is only 1.53wt%. Propylene was polymerized in the same way as in Example 1 using the resulting solid catalyst component (A). The results were shown in Table 4.

Example 7-8

A solid catalyst component (A) was prepared in the same manner as in Example except that the diisobutyl phthalate was changed to dibutyl phthalate and diisooctyl phthalate, respectively. Propylene was polymerized in the same way as in Example 1 using the resulting solid catalyst component (A). The results were shown in Table 4.

Example 9-10

A solid catalyst component (A) was prepared in the same manner as in Example 1 except that the phthalic anhydride was changed to maleic anhydride and pyromellitic dianhydride, respectively. Propylene was polymerized in the same way as in Example 1 using the resulting solid catalyst component (A). The results were shown in Table 4.

Table 4

| Example No. | Ti. content of catalyst (wt%) | Efficiency of catalyst (Kg-PP/g-Ti) | II(%) of the white powdery polymer | II(%) of the entire polymer | Melt index of polymer (g/10min) | Bulk density of polymer (g/ml) |
|---|---|---|---|---|---|---|
| Ex.5 | 3.08 | 410 | 97.8 | 97.4 | 4.8 | 0.32 |
| Ex.6 | 1.53 | 801 | 97.6 | 96.9 | 10.4 | 0.40 |
| Ex.7 | 2.04 | 1040 | 96.6 | 96.2 | 7.1 | 0.42 |
| Ex.8 | 2.24 | 536 | 95.8 | 94.4 | 9.5 | 0.38 |
| Ex.9 | 2.77 | 406 | 96.6 | 94.5 | 7.1 | 0.34 |
| Ex.10 | 4.14 | 268 | 93.7 | 91.1 | 37.4 | 0.34 |

12

Example 11-13

Triethyl aluminium (0.0008 mol), diphenyl dimethoxysilane (0.0001 mol); and 0,2 mg, calculated as the titanium atom, of the solid catalyst component (A) prepared in Example 1 were introduced into a 5-liter stainless steel autoclave which had thoroughly been purged with propylene. Liquid propylene (2.51) was introduced into the autoclave, and then 1.01 (standard volume) of hydrogen was introduced. The polymerization temperature was changed to 60°C, 70°C and 80°C, respectively. The polymerization time is 2 hours. The results were shown in Table 5.

Table 5

| Example No. | polymerization temperature (°C) | Efficiency of catalyst (Kg-PP/g-Ti) | II(%) of the entire polymer | Melt index of polymer (g/10min) | Bulk density of polymer (g/ml) |
|---|---|---|---|---|---|
| Ex.11 | 60 | 1590 | 96.3 | 4.3 | 0.44 |
| Ex.12 | 70 | 2790 | 97.9 | 3.0 | 0.45 |
| Ex.13 | 80 | 3290 | 99.7 | 1.4 | 0.46 |

Example 14-16

Propylene was polymerized in the same way as in Example 13 except that the amount of hydrogen used in the polymerization was changed to 1.01 (standard volume), 2.01, 3.21 and 4.01, respectively. The results were shown in Table 6.

Table 6

| Example No. | Amount of hydrogen liter (standard volume) | Efficiency of catalyst (Kg-PP/g-Ti) | II(%) of the entire polymer | Melt index of polymer (g/10min) | Bulk density of polymer (g/ml) |
|---|---|---|---|---|---|
| Ex.13 | 1.0 | 3290 | 98.7 | 1.4 | 0.46 |
| Ex.14 | 2.0 | 4120 | 98.0 | 5.5 | 0.46 |
| Ex.15 | 3.2 | 4430 | 97.8 | 12.4 | 0.46 |
| Ex.16 | 4.0 | 4200 | 97.5 | 14.9 | 0.46 |

Example 17-22

Propylene was polymerized in the same way as in Example 13 except that the amount of liquid propylene was changed to 3.01 and the polymerization time was changed to 0.5 hour, 1.0 hour, 2.0 hours, 3.5 hours, 5.0 hours and 7.0 hours, respectively. The results were shown in Table 7.

Table 7

| Example No. | polymerization time (hours) | Efficiency of catalyst (Kg-PP/g-Ti) | II(%) of the entire polymer | Melt index of polymer (g/10min) | Bulk density of polymer (g/ml) |
|---|---|---|---|---|---|
| Ex.17 | 0.5 | 1700 | 98.0 | 2.1 | 0.45 |
| Ex.18 | 1.0 | 2520 | 98.5 | 1.9 | 0.46 |
| Ex.19 | 2.0 | 3270 | 98.6 | 1.0 | 0.46 |
| Ex.20 | 3.5 | 4130 | 99.1 | 0.62 | 0.46 |
| Ex.21 | 5.0 | 5260 | 99.2 | 0.41 | 0.46 |
| Ex.22 | 7.0 | 6190 | 99.3 | 0.27 | 0.46 |

Example 23

Triethyl aluminum (0.00125mol), diphenyl dimethoxysilane (0.0001 mol) and 0.2mg, calculated as the titanium atom of the solid catalyst component (A) prepared in Example 1 were introduced into a 5-liter stainless steel autoclave which had thoroughly been purged with propylene. Liquid propylene (2.51) was introduced into the autoclave, and then 1.41 (standard volume) of hydrogen was introduced. The temperature was raised to 80°C, and propylene was polymerized for 2 hours. After the unreacted propylene was purged out of the autoclave, ethylene was introduced to maintain the pressure at 3 kg/cm$^2$(G). The temperature was maintained at 70°C. The gas phase polymerization was carried out for 2 hours. The amount of the resulting powdery polymer was 720g. The efficiency of the catalyst was 3600000 g-polymer/g-Ti. The ethylene content of the polymer was 13.9 mol%. The polymer had a melt index of 2.96 g/10min and a bulk density of 0.45 g/ml.

Example 24-25

Industrial grade hexane (1000ml), triethyl aluminum (0.002mol) and 0.2 mg, calculated as the titanium atom, of the solid catalyst component (A) prepared in Example 7 were introduced into a 2-liter stainless steel autoclave which had thoroughly been purged with hydrogen. The temperature was raised to 85°C. Hydrogen was introduced into the autoclave. After the pressure was raised to 2.5 kg/cm$^2$(G), the hydrogen introduction was stopped. Ethylene was introduced into the autoclave to adjust the pressure to 10kg/cm$^2$ (G); The pressure was maintained at this level and the temperature was maintained at 85°C during the polymerization. The polymerization time and results were shown in Table 8.

Table 8

| Example No. | polymerization time (hours) | Efficiency of catalyst (Kg-Pe/g-Ti)* | Melt index of polymer (g/10min) | Bulk density of polymer (g/ml) |
|---|---|---|---|---|
| Ex.24 | 2 | 537 | 1.03 | 0.35 |
| Ex.25 | 4 | 906 | 0.87 | 0.35 |

* Kg-pe/g-Ti = kg = polyethylene/g-Ti

Referring to the detailed description and examples foregoing, in comparison with the prior art, the catalyst system used in olefinic polymerization of the present invention has significant advantages as follows:

1. The activity of the catalyst of the present invention is very high, so that the amount of the residual

EP 0 258 485 B1

catalyst in resultant polymer is very small. Polymers with high quality can be obtained without any further treatment after the polymerization.

2. When the polymerization time is extended, the catalyst has little reduction in activity. The catalyst is not only suitable for homopolymerization, but also suitable for block copolymerization.

3. The resultant polymer has very high stereospecificity using the catalyst system of the present invention, so that it is unnecessary to separate the atactic polymer in producing process. The producing process was simplified.

4. When polymer which has high melt index are prepared, the resultant polymer show little reduction in stereosecificity, the activity of the catalyst was rather increased at the same time. This character of the catalyst is advantageous to preparation of porducts which have various melt indexes.

5. The resultant polymer has a narrow particle size distribution, a very low content of fine powder, and a high bulk density using the catalyst system of the present invention. This character of the catalyst is advantageous to polymerization process and manufacturing process.

6. When the polymerization temperature is raised, both of the activity of the catalyst and stereospecificity of the resultant polymer are increased. This character of the catalyst is advantageous to using high temperature in polymerization operation and removing polymerization heat from autoclave, so that the consumption of cooling energy is saved.

7. The catalyst system of the present invention is free from benzoates which have unpleasent odour, so that it is unnecessary to deodorise in the manufacturing process.

8. The catalyst system of the present invention is free from halogen-containing alkyl aluminium, so that the chlorine content of the resultant polymer is very low, and the equipments used in polymerization and manufacturing processes are not corroded.

9. The catalyst system of the present invention has wide usability, it is suitable for various methods of polymerization and for various olefins.

10. The operation conditions are not severe in the process of preparing the catalyst. The consumption of the starting material titanium tetrachloride is relatively low. The efficiency of the equipments are relatively high.

From the said advantages, when the catalyst system of the prsent invention is used in preparation of polyolefins, the quality of the products will be increased, the investment rate of the production equipment and product cost will be decreased.


**Claims**

1.  A solid catalyst component characterized in that it comprises 1.5-6.0% by weight of titanium, 10-20% by weight of magnesium, 40-70% by weight of halogen selected from the group consisting of chlorine, bromine and iodine, 5-25% by weight of polycarboxylic esters selected from the group consisting of the esters of aliphatic, aromatic and alicyclic polycarboxylic acids, and 0.1-2.5% by weight of organic phosphorus compounds.

2.  A catalyst component according to claim 1, wherein said organic phosphorus compounds are selected from the group consisting of hydrocarbyl esters of phosphoric acids and phosphorous acids.

3.  A catalyst component according to claim 1, wherein said polycarboxylic esters are selected from the group consisting of the esters of aromatic polycarboxylic acids.

4.  A catalyst component according to claim 3, wherein said polycarboxylic esters are selected from the group consisting of dibutyl phthalate and diisobutyl phthalate.

5.  A process for preparing the catalyst component of claim 1, characterized in that it comprises the steps of:

    (1) dissolving magnesium halide compounds selected from the group consisting of magnesium halide, complexes of magnesium dihalide with water or alcohol, and derivatives of magnesium dihalide wherein a halogen atom is substituted by a hydrocarbyl group or a halo-hydrocarbyl group in a solvent mixture consisting essentially of organic epoxy compounds having 2-8 carbon atoms and selected from the group consisting of oxides of aliphatic olefins and diolefins, halogenated aliphatic olefins and diolefins, glycidyl ethers and cyclic ethers, and organic phosphorus compounds selected from the group consisting of hydrocarbyl esters of phosphoric acids and phosphorous acids, to form a homogeneous solution;

16

(2) adding to the homogeneous solution of step (1) at least one auxiliary precipitant selected from the group consisting of organic anhydrides, organic acids, ethers and ketones;

(3) mixing the homogeneous solution of step (2) with a liquid titanium tetrahalide or its derivatives having the formula $TiX_n(OR)_{4-n}$, wherein X is halogen, R is an hydrocarbyl group being identical or different, and n is an integer of 0 to 4, to form precipitates;

(4) adding at least one polycarboxylic ester, preferably when the precipitates appear;

(5) separating the precipitates from the mixture and washing the separated precipitates with an inert diluent and then treating the separated precipitates with the titanium tetrahalide or its derivatives having the formula $TiX_n(OR)_{4-n}$, wherein X is halogen, R is an hydrocarbyl group being identical or different, and n is an integer of 0 to 4, or a mixture of said titanium tetrahalide or its derivatives and inert diluents;

(6) washing the treated precipitates with an inert diluent.

6. A process according to claim 5, wherein said auxiliary precipitant is selected from organic anhydrides.

7. A process according to claim 6, wherein said auxiliary precipitant is phthalic anhydride.

8. A process according to claim 5, wherein the amount of said auxiliary precipitant added is 0.03 to 1.0 moles (per mole of magnesium halide).

9. A process according to claim 5, wherein said inert diluent for washing in step (6) is 1, 2-dichloroethane.

10. A catalyst composition for use in olefinic polymerization, characterized in that it comprises the solid catalyst component as claimed in claim 1 and organic aluminium component.

11. A catalyst composition according to claim 10 wherein said catalyst composition further comprises organic silicon component.

12. A process for producing olefin polymers, characterized in that it comprises polymerising olefins in the presence of the catalyst composition as claimed in claim 10 or claim 11.

13. A process for producing olefin polymers according to claim 12, wherein the polymerization includes homopolymerization, copolymerization and block copolymerization.

14. A process for producing olefin polymers according to claim 12, wherein the polymerization includes liquid-phase polymerization and gas-phase polymerizaton, said liquid-phase polymerization may be carried out in the presence of an inert diluent.

15. A process for producing polypropylene which comprises polymerizing propylene in the presence of the catalyst composition as claimed in claim 11.

**Revendications**

1. Composant catalytique solide caractérisé en ce qu'il comprend 1,5 à 6,0 % en poids de titane, 10 à 20 % en poids de magnésium, 40 à 70 % en poids d'un halogène choisi dans le groupe constitué par le chlore, le brome et l'iode, 5 à 25 % en poids d'esters polycarboxyliques choisis dans le groupe constitué par les esters des acides polycarboxyliques aliphatiques, aromatiques et alicycliques, et 0,1 à 2,5 % en poids de composés organiques du phosphore.

2. Composant catalytique selon la revendication 1, dans lequel lesdits composés organiques du phosphore sont choisis dans le groupe constitué par les esters hydrocarbyliques des acides phosphoriques et des acides phosphoreux.

3. Composant catalytique selon la revendication 1, dans lequel lesdits esters polycarboxyliques sont choisis dans le groupe constitué par les esters des acides polycarboxyliques aromatiques.

4. Composant catalytique selon la revendication 3, dans lequel lesdits esters polycarboxyliques sont choisis dans le groupe constitué par le phtalate de dibutyle et le phtalate de diisobutyle.

EP 0 258 485 B1

**5.** Procédé pour préparer le composant catalytique de la revendication 1, caractérisé en ce qu'il comprend les étapes de :

(1) dissolution de composés de type halogénure de magnésium choisis dans le groupe constitué par un halogénure de magnésium, les complexes d'un dihalogénure de magnésium avec l'eau ou un alcool, et les dérivés de dihalogénure de magnésium dans lesquels un atome d halogène est remplacé par un groupe hydrocarbyle ou un groupe halogénohydrocarbyle, dans un mélange solvant constitué essentiellement de composés organiques de type époxy ayant 2 à 8 atomes de carbone et choisis dans le groupe constitué par les oxydes des oléfines et dioléfines aliphatiques et les oléfines et dioléfines aliphatiques halogénées, les éthers glycidyliques et les éthers cycliques et les composés organiques du phosphore choisis dans le groupe constitué par les esters hydrocarbyliques des acides phosphoriques et des acides phosphoreux, pour former une solution homogène ;

(2) addition à la solution homogène de l'étape (1) d'au moins un précipitant auxiliaire choisi dans le groupe constitué par les anhydrides organiques, les acides organiques, les éthers et les cétones ;

(3) mélange de la solution homogène de l'étape (2) avec un tétrahalogénure de titane liquide ou ses dérivés répondant à la formule $TiX_n(OR)_{4-n}$, dans laquelle X est un halogène, les R sont des groupes hydrocarbyle identiques ou différents et n est un entier de 0 à 4, pour former un précipité ;

(4) addition d'au moins un ester polycarboxylique, de préférence lorsque le précipité apparaît ;

(5) séparation du précipité du mélange et lavage du précipité séparé avec un diluant inerte, puis traitement du précipité séparé avec le tétrahalogénure de titane ou ses dérivés de formule $TiX_n(OR)_{4-n}$, dans laquelle X est un halogène, les R sont des groupes hydrocarbyle identiques ou différents et n est un entier de 0 à 4, ou un mélange dudit tétrahalogénure de titane ou de ses dérivés et de diluants inertes ;

(6) lavage du précipité traité avec un diluant inerte.

**6.** Procédé selon la revendication 5, dans lequel ledit précipitant auxiliaire est choisi parmi les anhydrides organiques.

**7.** Procédé selon la revendication 6, dans lequel ledit précipitant auxiliaire est l'anhydride phtalique.

**8.** Procédé selon la revendication 5, dans lequel la quantité dudit précipitant auxiliaire ajoutée est de 0,03 à 1,0 mode (par mole d'halogénure de magnésium).

**9.** Procédé selon la revendication 5, dans lequel ledit diluant inerte pour le lavage dans l'étape (6) est le 1,2-dichloroéthane.

**10.** Composition catalytique pour l'emploi dans la polymérisation oléfinique, caractérisée en ce qu'elle comprend le composant catalytique solide de la revendication 1 et un composant organique de l'aluminium.

**11.** Composition catalytique selon la revendication 10, ladite composition catalytique comprenant de plus un composant organique du silicium.

**12.** Procédé pour produire des polymères oléfiniques, caractérisé en ce qu'il comprend la polymérisation d'oléfines en présence de la composition catalytique de la revendication 10 ou de la revendication 11.

**13.** Procédé pour produire des polymères oléfiniques selon la revendication 12, dans lequel la polymérisation comprend l'homopolymérisation, la copolymérisation et la copolymérisation séquencée.

**14.** Procédé pour produire des polymères oléfiniques selon la revendication 12, dans lequel la polymérisation comprend la polymérisation en phase liquide et la polymérisation en phase gazeuse, ladite polymérisation en phase liquide pouvant être effectuée en présence d'un diluant inerte.

**15.** Procédé pour produire du polypropylène, qui comprend la polymérisation du propylène en présence de la composition catalytique de la revendication 11.

**Patentansprüche**

**1.** Feste Katalysatorkomponente,

18

EP 0 258 485 B1

**dadurch gekennzeichnet,**

daß sie folgendes aufweist: 1,5-6,0 Gew.-% Titan, 10-20 Gew.-% Magnesium, 40-70 Gew.-% Halogen, das Chlor, Brom oder Iod ist, 5-25 Gew.-% Polycarbonsäureester, die Ester von aliphatischen, aromatischen oder alicyclischen Polycarbonsäuren sind, und 0,1-2,5 Gew.-% organische Phosphorverbindungen.

2. Katalysatorkomponente nach Anspruch 1,
   **dadurch gekennzeichnet,**
   daß die organischen Phosphorverbindungen Hydrocarbylester von Phosphor(V)-Säuren oder Phosphorsäuren sind.

3. Katalysatorkomponente nach Anspruch 1,
   **dadurch gekennzeichnet,**
   daß die Polycarbonsäureester Ester von aromatischen Polycarbonsäuren sind.

4. Katalysatorkomponente nach Anspruch 3,
   **dadurch gekennzeichnet,**
   daß die Polycarbonsäureester Dibutylphthalat oder Diisobutylphthalat sind.

5. Verfahren zur Herstellung der Katalysatorkomponente von Anspruch 1,
   **dadurch gekennzeichnet,**
   daß es die folgenden Schritte aufweist:
   (1) Auflösen von Magnesiumhalogenidverbindungen, die Magnesiumhalogenid, Komplexe von Magnesiumdihalogenid mit Wasser oder Alkohol oder Derivate von Magnesiumdihalogenid, in denen ein Halogenatom durch eine Hydrocarbylgruppe oder eine Halogen-Hydrocarbylgruppe substituiert ist, sind, in einem Lösungsmittelgemisch, das im wesentlichen besteht aus organischen Epoxidverbindungen mit 2-8 Kohlenstoffatomen, die Oxide von aliphatischen Olefinen und Diolefinen, halogenierte aliphatische Olefine und Diolefine, Glycidylether oder cyclische Ether sind, sowie organischen Phosphorverbindungen, die Hydrocarbylester von Phosphor(V)-Säuren oder Phosphorsäuren sind, unter Bildung einer homogenen Lösung;
   (2) Zugeben zu der homogenen Lösung aus Schritt (1) wenigstens eines Hilfsfällungsmittels, das organische Anhydride, organische Säuren, Ether oder Ketone ist;
   (3) Vermischen der homogenen Lösung aus Schritt (2) mit flüssigem Titantetrahalogenid oder seinen Derivaten der Formel $TiX_n(OR)_{4-n}$, wobei X = Halogen, R = eine Hydrocarbylgruppe, die gleich oder verschieden ist, und n = eine ganze Zahl von 0-4, zur Bildung von Fällungen;
   (4) Zufügen von wenigstens einem Polycarbonsäureester, bevorzugt beim Auftreten der Fällungen;
   (4) Abtrennen der Fällungen aus dem Gemisch und Waschen der abgetrennten Fällungen mit einem inerten Verdünner und anschließendes Aufbereiten der abgetrennten Fällungen mit dem Titantetrahalogenid oder seinen Derivaten der Formel $TiX_n(OR)_{4-n}$, wobei X = Halogen, R = eine Hydrocarbylgruppe, die gleich oder verschieden ist, und n = eine ganze Zahl von 0-4, oder einem Gemisch aus dem Titantetrahalogenid oder seinen Derivaten und inerten Verdünnern;
   (6) Waschen der aufbereiteten Fällungen mit einem inerten Verdünner.

6. Verfahren nach Anspruch 5,
   **dadurch gekennzeichnet,**
   daß das Hilfsfällungsmittel ein organisches Anhydrid ist.

7. Verfahren nach Anspruch 6,
   **dadurch gekennzeichnet,**
   daß das Hilfsfällungsmittel Phthalsäureanhydrid ist.

8. Verfahren nach Anspruch 5,
   **dadurch gekennzeichnet,**
   daß die zugesetzte Menge des Hilfsfällungsmittels 0,03-1,0 mol (pro Mol Magnesiumhalogenid) ist.

9. Verfahren nach Anspruch 5,
   **dadurch gekennzeichnet,**
   daß der inerte Verdünner zum Waschen in Schritt (6) 1,2-Dichlorethan ist.

19

**10.** Katalysatorzusammensetzung zur Verwendung bei der Olefinpolymerisation,
**dadurch gekennzeichnet,**
daß sie die feste Katalysatorkomponente nach Anspruch 1 sowie eine organische Aluminiumkomponente aufweist.

**11.** Katalysatorzusammensetzung nach Anspruch 10,
**dadurch gekennzeichnet,**
daß die Katalysatorzusammensetzung außerdem eine organische Siliciumkomponente aufweist.

**12.** Verfahren zur Herstellung von Olefinpolymeren,
**dadurch gekennzeichnet,**
daß es das Polymerisieren von Olefinen in Gegenwart der Katalysatorzusammensetzung nach Anspruch 10 oder Anspruch 11 umfaßt.

**13.** Verfahren zur Herstellung von Olefinpolymeren nach Anspruch 12,
**dadurch gekennzeichnet,**
daß die Polymerisation Homo-, Co- und Block-Copolymerisation umfaßt.

**14.** Verfahren zur Herstellung von Olefinpolymeren nach Anspruch 12,
**dadurch gekennzeichnet,**
daß die Polymerisation Flüssigphasen- und Gasphasenpolymerisation umfaßt, wobei die Flüssigphasenpolymerisation in Gegenwart eines inerten Verdünners durchgeführt werden kann.

**15.** Verfahren zur Herstellung von Polypropylen,
**gekennzeichnet durch**
Polymerisieren von Propylen in Gegenwart der Katalysatorzusammensetzung nach Anspruch 11.